# EUROPÄISCHE PATENTSCHRIFT

(11) **EP 1 314 511 B1**
(45) Veröffentlichungstag und Bekanntmachung des Hinweises auf die Patenterteilung: **10.05.2006**
(21) Anmeldenummer: 02026105.3
(22) Anmeldetag: 22.11.2002
(51) Int. Cl.: B23P 11/02, B23B 31/02, H05B 6/14

(54) **Induktionsspule für ein induktives Schrumpfgerät**
Induction coil for induction shrinking device
Bobine d'induction pour dispositif de contraction inductif

(30) Priorität: 23.11.2001 DE 10157432
(43) Veröffentlichungstag der Anmeldung: 28.05.2003
(73) Patentinhaber: Franz Haimer Maschinenbau KG, 86568 Hollenbach-Igenhausen (DE)
(72) Erfinder: Haimer, Franz, 86568 Hollenbach-Igenhausen (DE); Haimer, Josef, 86568 Hollenbach-Igenhausen (DE)
(74) Vertreter: Liska, Horst

(56) Entgegenhaltungen:
- CH-A- 254 868
- DE-A- 19 915 412
- DE-C- 10 015 074
- DE-U- 20 008 937

## Beschreibung

Die Erfindung betrifft eine Vorrichtung zum induktiven Erwärmen eines eine zentrische Aufnahmeöffnung für einen Schaft eines Rotationswerkzeugs, beispielsweise eines Bohrers oder Fräsers oder eines Reibwerkzeugs enthaltenden Hülsenabschnitts eines Werkzeughalters, der den in der Aufnahmeöffnung sitzenden Schaft des Werkzeugs im Presssitz hält und bei Erwärmung freigibtnach demOberbegriff des Anspruchs 1 bzw. des Anspruchs 10 .
Eine solche Vorrichtung ist aus DE 199 15 412 A1 bekannt.
Es ist bekannt, insbesondere bei mit hoher Drehzahl rotierenden Werkzeugen, deren Schaft in einen Hülsenabschnitt eines Werkzeughalters einzuschrumpfen. Der Hülsenabschnitt wird hierzu beispielsweise mittels einer ihn umschließenden Induktionsspule erwärmt, so dass der Werkzeugschaft in die damit sich vergrößernde Aufnahmeöffnung des Hülsenabschnitts eingesteckt werden kann. Der Außendurchmesser des Werkzeugschafts ist etwas größer als der Nenndurchmesser der Aufnahmeöffnung, so dass das Werkzeug nach dem Abkühlen des Hülsenabschnitts im Presssitz drehfest in dem Werkzeughalter gehalten ist.

Zum Entnehmen des Werkzeugs muss der Hülsenabschnitt erneut erwärmt werden. Da hierbei die Gefahr besteht, dass sich auch der Werkzeugschaft miterwärmt, kann es zu Problemen kommen, wenn die Wärmedehnung des Hülsenabschnitts bezogen auf den sich gleichfalls ausdehnenden Werkzeugschaft unzureichend ist.

Aus DE 199 15 412 A1 ist eine induktive Heizvorrichtung zum Erwärmen des Hülsenabschnitts eines Werkzeughalters bekannt. Die Vorrichtung hat eine auf den Hülsenabschitt des Werkzeughalters aufsetzbare und ihn hierbei mit radialem Abstand ringförmig umschließende Induktionsspule, die aus einem Generator mit elektrischem Wechselstrom gespeist wird. Das Magnetfeld der Induktionsspule induziert in dem elektrisch leitenden, zumeist auch magnetisierbaren Material des Werkzeughalters lnduktionsströme, die den Hülsenabschnitt unmittelbar erwärmen. Die Induktionsspule erstreckt sich axial zumindest über die Eingriffslänge, mit der der Werkzeugschaft in die Aufnahmeöffnung eintaucht und schließt mit ihrer Wicklung etwa im Bereich des werkzeugseitigen Stirnendes des Hülsenabschnitts axial ab. In radialer Richtung verläuft der Innenumfang der Induktionsspule im Abstand zum Hülsenabschnitt, um ein und dieselbe Induktionsspule bei Werkzeughaltern mit unterschiedlichem Außendurchmesser des Hülsenabschnitts nutzen zu können.

An ihren Stirnseiten und ihrem Außenumfang ist die Wicklung der Induktionsspule mit einem Mantel aus magnetisierbarem, d.h. ferromagnetischem oder ferrimagnetischem Material ummantelt, dessen bezogen auf Luft hohe magnetische Leitfähigkeit den magnetischen Fluss im Wesentlichen auf den Mantel konzentriert. Der dem werkzeugseitigen Ende des Hülsenabschnitts benachbarte Bereich des Mantels ist als im Wesentlichen scheibenförmiges Ringelement ausgebildet, welches mit seinem Innenumfang auf dem werkzeugseitigen Stirnende des Hülsenabschnitts aufliegt und sich radial über die Stirnfläche der Wicklung der Induktionsspule hinweg bis zu deren Außenumfang erstreckt. Das Ringelement bildet einen Polschuh, der den magnetischen Fluss der Induktionsspule auf den Hülsenabschnitt konzentrieren soll. Ein weiterer Polschuh ist an der axial gegenüber liegenden Stirnfläche der Induktionsspule angeordnet und über den magnetisierbaren Mantel mit dem auf der Stirnfläche des Hülsenabschnitts aufliegenden Polschuh magnetisch leitend verbunden.

Schrumpfwerkzeughalter der vorstehend erläuterten Art sollen ein möglichst großes Drehmoment auf das im Presssitz gehaltene Werkzeug übertragen können. Untersuchungen mit dem Ziel, das übertragbare Drehmoment zu erhöhen, haben gezeigt, dass Induktionsspulen der beispielsweise aus DE 199 15 412 A1 bekannten Art den Hülsenabschnitt des Werkzeughalters in erster Linie in einem mittleren Bereich erwärmen, die Temperatur des Hülsenabschnitts in diesem mittleren Bereich also maximal ist und von dort in axialer Richtung des Hülsenabschnitts nach beiden Seiten abnimmt. Diese Temperaturverteilung hat Konsequenzen für das Ausschrumpfen des Werkzeugs aus dem Werkzeughalter, denn der Schaft des in dem Hülsenabschnitt sitzenden Werkzeugs dehnt sich in dem mittleren Bereich des Hülsenabschnitts stärker aus, mit der Folge, dass er beim Herausziehen an dem unter Umständen sich nicht hinreichend aufweitenden stirnseitigen Bereich des Hülsenabschnitts verklemmt. Herkömmlich wurde die Klemmneigung durch Vergrößern der Paarungstoleranzen von Werkzeugschaft und Aufnahmeöffnung des Hülsenabschnitts umgangen, was jedoch das vom Werkzeughalter auf das Werkzeug übertragbare Drehmoment gemindert hat.

Es ist Aufgabe der Erfindung, eine Schrumpfvorrichtung zu schaffen, mit deren Hilfe auch engpassende Werkzeuge aus Werkzeughaltern problemlos ausgeschrumpft werden können.

Die Lösung dieser Aufgabe ist durch die Merkmale der Ansprüche 1 oder 10 gekennzeichnet.

Die Erfindung geht aus von einer Vorrichtung zum induktiven Erwärmen eines eine zentrische Aufnahmeöffnung für einen Schaft eines Rotationswerkzeugs enthaltenden Hülsenabschnitts eines Werkzeughalters, der den in der Aufnahmeöffnung sitzenden Schaft des Werkzeugs im Presssitz hält und bei Erwärmung freigibt. Eine solche Vorrichtung umfasst
- eine den Hülsenabschnitt des Werkzeughalters umschließende Induktionsspule und
- einen die Induktionsspule mit elektrischem Strom periodisch wechselnder Amplitude speisenden Generator.

Die vorstehend angegebene Aufgabe wird erfindungsgemäß dadurch gelöst, dass die Wicklung in Richtung der Spulenachse einen zwischen zwei Wicklungshauptbereichen gelegenen Zwischenbereich umfaßt und - gesehen in einer Axiallängsschnittebene der Induktionsspule- die Anzahl der Spulenwindungen ihrer Wicklung pro Längeneinheit in Richtung der Spulenachse oder/und die Anzahl der Spulenwindungen pro Flächeneinheit der Axiallängsmittelebene in dem Zwischenbereich kleiner ist als in den beiden Wicklungshauptbereichen oder/und der Wicklungsinnendurchmesser in den beiden Wicklungshauptbereichen kleiner ist als in dem Zwischenbereich oder/und der Wicklungsinnendurchmesser zumindest in einem axialen Teilbereich der Induktionsspule von den beiden Wicklungshauptbereichen zum Zwischenbereich hin zunimmt.

Jede der vorstehend genannten Maßnahmen für sich allein oder auch in Kombination mit anderen der genannten Maßnahmen beeinflusst die Verteilung des Magnetfelds bzw. des Magnetflusses im Bereich des Hülsenabschnitts des Werkzeughalters und sorgt für eine gleichmäßigere Verteilung der Induktionsströme in axialer Richtung des Hülsenabschnitts. Verglichen mit herkömmlichen Induktionsspulen wird der Hülsenabschnitt und damit auch der Schaft des darin gehaltenen Werkzeugs in einem mittleren Bereich weniger stark erwärmt als in den beiderseits axial sich anschließenden Endbereichen des Hülsenabschnitts. Aufgrund der gleichmäßigen Erwärmung des Hülsenabschnitts können auch Werkzeuge mit sehr engen Toleranzen ein- und ausgeschrumpft werden.

Um die Anzahl der Spulenwindungen pro Längeneinheit in Richtung der Spulenachse variieren zu können, kann die Anzahl radial übereinander liegender Windungen längs der Spulenachse verändert werden. Die Anzahl der Spulenwindungen pro Flächeneinheit der Axiallängsschnittebene lässt sich durch Verändern der axialen oder/und radialen Abstände benachbarter Windungen verändern. Hierzu können beispielsweise Abstandhalter mit in vorbestimmter Weise sich ändernder Dicke zwischen radial übereinander liegende Windungslagen oder zwischen axial benachbarte Windungen eingelegt oder eingewickelt werden.

Eine weitere erfindungsgemäße Maßnahme zur Minderung der Induktionsströme in dem mittleren Bereich des Hülsenabschnitts besteht in der Veränderung des Wicklungsinnendurchmessers. Der Wicklungsinnendurchmesser ist in dem Zwischenbereich zwischen den Wicklungshauptbereichen größer als in den beiden Wicklungshauptbereichen. Um eine solche Induktionsspule möglichst einfach in vorbestimmter Weise wickeln zu können, ist in einer bevorzugten Ausgestaltung vorgesehen, dass die Wicklung auf eine Spulenkörperhülse gewickelt ist, deren den Wicklungsinnendurchmesser bestimmender Außenmantel zumindest in dem Zwischenbereich einen Ringwulst bildet, in dem Zwischenbereich also die Windungsdurchmesser vergrößert. Der Ringwulst kann auf einen Teilbereich der Gesamtlänge der Spulenkörperhülse begrenzt sein; die Spulenkörperhülse kann aber auch auf ihrer ganze Länge ballig bzw. tonnenförmig gestaltet sein.

In einer bevorzugten, besonders einfach realisierbaren Ausgestaltung hat die Wicklung zumindest über einen axialen Teilabschnitt des Zwischenbereichs keine Windungen. Die Induktionsspule besteht in diesem Fall aus zwei in axialem Abstand voneinander angeordneten, die beiden Wicklungshauptbereiche bildenden Teilwicklungen. Der von Windungen freie Teilabschnitt des Zwischenbereichs kann in einem solchen Fall magnetisch leitendes Material enthalten, welches den Magnetfluss in diesem Teilabschnitt außerhalb des weniger stark zu erwärmenden Bereichs des Hülsenabschnitts des Werkzeughalters konzentriert und dementsprechend die Induktionsströme in diesem Bereich des Hülsenabschnitts mindert. Um das Wickeln der zweigeteilten Induktionsspule zu erleichtern, kann die Wicklung auf eine Spulenkörperhülse mit einem die Wicklungshauptbereiche in dem wicklungsfreien Teilabschnitt des Zwischenbereichs trennenden Ringflansch gewickelt sein.

Herkömmliche Induktionsspulen, wie sie beispielsweise aus DE 199 15 412 A1 bekannt sind, haben eine einzige mit über die axiale Spulenlänge gleichbleibender Lagenzahl gewickelte Wicklung, deren Windungen sämtlich zueinander in Reihe geschaltet sind. Eine weitere Maßnahme zur Beeinflussung der axialen Verteilung der Induktionsströme und damit der Erwärmungstemperatur längs des Hülsenabschnitts des Werkzeughalters besteht darin, die Wicklung in zumindest zwei axial nebeneinander angeordnete Wicklungshauptbereiche mit jeweils einer Vielzahl von Windungen aufzuteilen und die Wicklungshauptbereiche zueinander parallel zu schalten, und zwar so, dass die Windungen der Wicklungshauptbereiche gleichsinnig von Strom durchflossen sind. Mit anderen Worten, es werden zur Erwärmung des Hülsenabschnitts mehrere voneinander gesonderte, jedoch axial nebeneinander angeordnete Teilspulen oder Teilwicklungen eingesetzt, die gezielt der Erwärmung eines Teilbereichs des Hülsenabschnitts angepasst werden können. Dieser vorstehend erläuterte Aspekt der Erfindung hat auch selbständige erfinderische Bedeutung. Hierbei ist vorgesehen, dass die Ströme in den Wicklungshauptbereichen unabhängig voneinander eingestellt sind, um auf diese Weise die in dem Hülsenabschnitt induzierten Induktionsströme im Sinne einer gleichmäßigen Erwärmung festzulegen.

Um das Verhältnis der Ströme in den Wicklungshauptbereichen festzulegen, kann z.B. der Drahtdurchmesser der Wicklungshauptbereiche unterschiedlich gewählt werden. Auch kann jeder Wicklungshauptbereich über gesonderte Generatoren gesondert mit Strom insbesondere Strom eingeprägter konstanter Amplitude gespeist werden.

Im Bereich einer oder beider axialer Stirnenden der Wicklung oder/und an ihrem Umfang sind zweckmäßigerweise Flussleitelemente aus elektrisch nicht leitendem, magnetisch jedoch leitendem Material angeordnet. Derartige magnetische Flussleitelemente mindern den magnetischen Streufluss außerhalb der Induktionsspule und konzentrieren den magnetischen Fluss auf den Hülsenabschnitt des Werkzeughalters. Soweit, wie vorstehend erläutert, die Wicklung aus mehreren zueinander parallel geschalteten Wicklungshauptbereichen aufgebaut ist, können solche Flussleitelemente auch für jeden Wicklungshauptbereich gesondert vorgesehen sein.

Im Folgenden werden Ausführungsbeispiele der Erfindung anhand einer Zeichnung näher erläutert. Hierbei zeigt
Fig. 1 einen Axiallängsschnitt durch eine Induktionsspule zur induktiven Erwärmung eines Werkzeughalters,
Fig. 2 einen Axiallängsschnitt durch eine Variante der Induktionsspule und
Fig. 3 eine weitere Variante einer Wicklung der Induktionsspule.

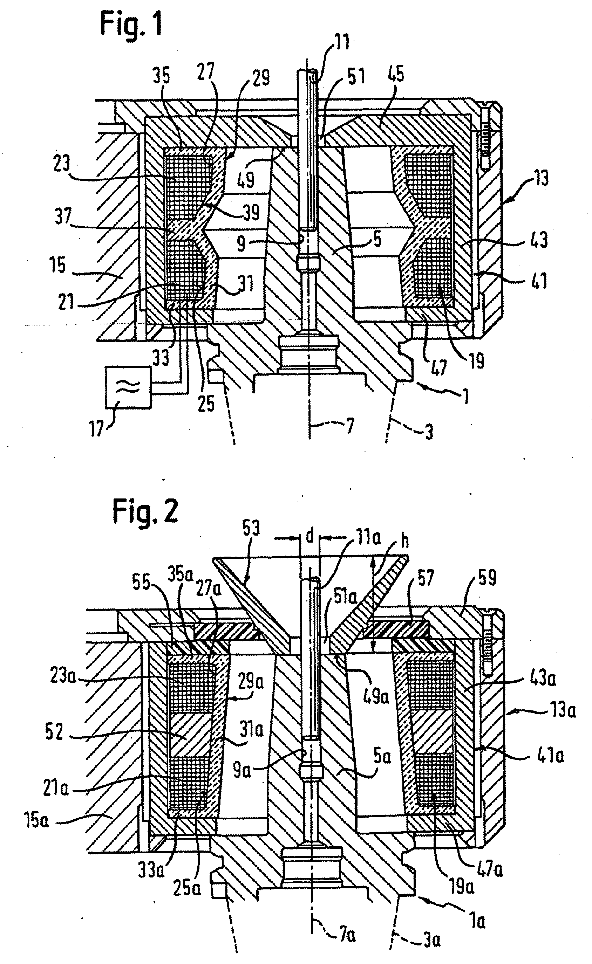

Fig. 1 zeigt einen hier einteiligen, ggf. aber auch mehrteiligen Werkzeughalter 1 aus einem zumindest elektrisch leitenden, hier aber auch magnetisierbaren Material, wie z.B. Stahl, der an seinem axial einen Ende ein Norm-Anschlussstück, wie z.B. einen Steilkegel 3, und an seinem axial anderen Ende einen Hülsenabschnitt 5 aufweist. Der Hülsenabschnitt 5 enthält zentrisch zur Drehachse 7 des Werkzeughalters eine Aufnahmeöffnung 9 für ein mit seinem Schaft 11 in die Aufnahmeöffnung 9 in nachfolgend noch näher erläuterter Weise einsetzbares, ansonsten nicht näher dargestelltes Rotationswerkzeug, beispielsweise einen Bohrer, einen Fräser oder ein Reibwerkzeug. Der Außendurchmesser des Schafts 11 ist etwas größer als der freie Nenndurchmesser der Aufnahmeöffnung 9, so dass der Schaft 11 eingesetzt in den Hülsenabschnitt 5 für die Übertragung des Arbeitsdrehmoments im Presssitz gehalten ist.

Um den Werkzeugschaft 11 in den Werkzeughalter 1 einsetzen oder aus diesem entnehmen zu können, wird der Hülsenansatz 5 durch Erwärmen aufgeweitet. Die Erwärmung erfolgt mittels einer auf den Hülsenansatz 5 aufgesetzten und diesen mit radialem Abstand ihres Innendurchmessers vom Außenumfang des Hülsenabschnitts 5 konzentrisch umschließenden Induktionsspule 13, die mittels eines bei 15 angedeuteten Halters eines Induktionsschrumpfgeräts achsparallel zur Drehachse 7 verschiebbar gehalten ist und aus einem Stromgenerator 17 mit Wechselstrom oder gepulstem Gleichstrom einer Frequenz von beispielsweise 10 - 50 kHz gespeist wird. Der von einer angenähert zylindrischen, nachfolgend noch näher erläuterten Wicklung 19 erzeugte Magnetfluss induziert in dem Hülsenabschnitt 5 Wirbelströme, die den Hülsenabschnitt 5 in relativ kurzer Zeit erwärmen und damit die Aufnahmeöffnung 9 zum Einschieben oder Herausziehen des Werkzeugschafts 11 hinreichend aufweiten.

Die Wicklung 19 hat zwei mit axialem Abstand voneinander angeordnete, gesonderte Wicklungshauptbereiche 21, 23, die zueinander parallel an den Generator 17 angeschlossen sind, und zwar unter Berücksichtigung ihres Wicklungssinns in der Weise, dass sie von dem Strom des Generators 17 gleichsinnig durchflossen sind, also bezogen auf den Hülsenansatz 5 gleichsinnig gerichtete Magnetfelder erzeugen. Die beiden Wicklungshauptbereiche 21, 23 sind in gesonderte Ringkammern 25, 27 eines hülsenförmigen Spulenkörpers 29 aus einem temperaturfesten Kunststoff oder aus Keramik eingebracht, dessen Basishülse 31 den Wicklungsinnendurchmesser der Wicklung 19 bestimmt. Der Spulenkörper 29 hat an seinen Stirnenden radial nach außen abstehende Stirnwangen 33, 35, die die Ringkammern 25, 27 axial nach außen begrenzen, und trägt zwischen den Wicklungshauptbereichen 21, 23 einen den Wicklungsraum in die beiden Kammern 25, 27 unterteilenden Ringflansch 37, dessen axiale Dicke einen windungs- bzw. wicklungsfreien Zwischenbereich zwischen den beiden Wicklungshauptbereichen 21, 23 festlegt.

Zu dem genannten wicklungsfreien Zwischenbereich hin ist die Basishülse 31 des Spulenkörpers 29 über einen axialen Teilbereich der axialen Länge der Wicklung 19 mit einem hier doppelkonusförmigen Ringwulst 39 versehen, von dessen durchmessergrößtem Umfang der Ringflansch 37 ausgeht. Im übrigen ist die Basishülse 31 leicht konusförmig gestaltet und verjüngt sich entsprechend der äußeren Mantelfläche des Hülsenansatzes 15 zur Einsteckseite des Werkzeugs hin. Die durch die Wangen 33, 35 und den Ringflansch 37 definierte Außenkontur des Spulenkörpers 29 ist kreiszylindrisch und die Wicklung 19 ist so eingebracht, dass ihre Außenkontur gleichfalls kreiszylindrisch ist. Die Innenkontur der Wicklung 19 folgt in den Spulenkammern 25, 27 der Kontur der Basishülse 31 bzw. ihres Ringwulstes 39. Dementsprechend ändert sich - gesehen in der Längsschnittebene der Fig. 1 - für jeden der beiden Wicklungshauptbereiche 21, 23 die Anzahl der radial übereinander liegenden Windungen pro Längeneinheit in Axialrichtung. Insbesondere mindert der Ringwulst 39 die Anzahl radial übereinander liegender Windungen der beiden Wicklungshauptbereiche 21, 23 zum Mittelbereich des die maximale Eingriffslänge festlegenden Hülsenansatzes 5 hin. Zusammen mit dem wicklungsfreien Bereich zwischen den Wicklungshauptbereichen 21, 23 führt dies zu einer Minderung des Magnetflusses in dem Mittelbereich und damit zu einer Minderung der den Hülsenansatz 5 in dem Mittelbereich erwärmenden Induktionsströme. Aufgrund der sich dadurch in Axialrichtung ergebenden gleichmäßigen Erwärmung des Hülsenansatzes 5 wird auch der auszuschrumpfende Werkzeugschaft 11 gleichmäßig erwärmt und kann bei relativ geringen Toleranzen sicher ausgeschrumpft werden.

Der Ringwulst 39 der Basishülse 31 vergrößert den Wicklungsinnendurchmesser der Wicklungshauptbereiche 21, 23 zu dem Mittelbereich hin, was gleichfalls für eine gleichmäßigere Temperaturverteilung längs des Hülsenansatzes 5 sorgt. Es versteht sich, dass der Ringwulst 39 sich auch über die gesamte axiale Länge des Spulenkörpers 29 erstrecken kann. Auch kann der Ringwulst an Stelle der dargestellten Doppelkonusform ballig oder tonnenförmig gestaltet sein.

In dem Ausführungsbeispiel der Fig. 1 sind die Windungen der Wicklungshauptbereiche 21, 23 gleichförmig gewickelt. Zur Beeinflussung der Temperaturverteilung in Achsrichtung des zu erwärmenden Hülsenabschnitts 5 kann die Anzahl von Windungen pro Flächeneinheit der Längsschnittebene variiert werden und zwar so, dass die Windungsdichte zum Mittelbereich hin abnimmt. Definierte Abstände können durch lagenweise mit eingewickkelte Abstandhülsen oder durch Abstandhalter zwischen axial benachbarten Windungen festgelegt werden.

Die Wicklungshauptbereiche 21, 23 können für unterschiedliche Magnetflüsse bemessen sein und unterschiedliche Windungsdichten, Drahtdicken oder Wicklungsinnendurchmesser haben. Auch können die einzelnen Wicklungshauptbereiche 21, 23 mit unterschiedlich großen Strömen gespeist werden. Soweit vorangegangen von einer Parallelschaltung der Wicklungshauptbereiche 21, 23 die Rede ist, soll hierunter auch die Speisung mit unterschiedlich großen Strömen, insbesondere unterschiedlich großen eingeprägten Strömen, verstanden werden.

Um den magnetischen Streufluss außerhalb des Hülsenansatzes 5 möglichst gering zu halten, ist die Wicklung 19 von einem Flussleitkörper 41 aus elektrisch nicht leitendem, ferromagnetischen oder ferrimagnetischen Material, beispielsweise Ferrit oder dgl., ummantelt. Der Flussleitkörper 41 besteht aus einer die Wicklung 19 radial außen ummantelnden Hülse 43, an die sich axial beiderseits der Wicklung 19 ringscheibenförmige Polschuhe 45, 47 anschließen. Die Polschuhe 45, 47 überdecken die axialen Stirnseiten der Wicklung 19 und stehen zum Hülsenansatz 5 hin vor. Der auf der Werkzeugeinsteckseite des Hülsenansatzes 5 vorgesehene Polschuh 45 überlappt die Stirnseite 49 des Hülsenansatzes 5 und stützt sich an der Stirnseite 49 ab. Zwischen seinem Innenumfang und dem Schaft 11 verbleibt jedoch ein kleiner Ringspalt 51. Der Flussleitkörper 41 ist als einteiliges Element dargestellt. Es versteht sich, dass er auch aus mehreren Einzelelementen aufgebaut sein kann.

Im Folgenden werden Varianten der Induktionsspule aus Figur 1 erläutert. Zur Erläuterung des Aufbaus, der Wirkungsweise und eventueller Varianten wird auf die Beschreibung von Figur 1 Bezug genommen. Gleichwirkende Komponenten sind mit den Bezugszahlen aus Figur 1 bezeichnet und zur Unterscheidung mit einem Buchstaben versehen. Der Generator 17 aus Figur 1 ist nicht dargestellt, jedoch vorhanden.

Auch die Induktionsspule 13a aus Figur 2 umfasst eine Wicklung 19a mit zwei Wicklungshauptbereichen 21a, 23a, die durch einen wicklungsfreien Zwischenbereich axial voneinander getrennt sind. Im Unterschied zu Figur 1 füllt jedoch nicht eine aus elektrisch isolierendem Material bestehende Komponente des Spulenkörpers 29a diesen wicklungsfreien Zwischenbereich aus, sondern ein Ring 52 aus ferromagnetischem oder ferrimagnetischem, allerdings auch hier elektrisch nicht leitendem Material, welches den magnetischen Fluss zwischen den beiden Wicklungshauptbereichen 21 a, 23a auf sich konzentriert. Der Ring 52 kann Bestandteil des Flussleitelements 41 a sein. Aufgrund des windungsfreien Bereichs zwischen den Wicklungshauptbereichen 21 a, 23a variiert die Anzahl der Spulenwindungen längs des Hülsenabschnitts 5 und sorgt, unterstützt durch den ferromagnetischen Ring 52, für eine gleichmäßige Erwärmung des Hülsenabschnitts 5a beim Ausschrumpfen des Werkzeugschafts 11a.

Im dargestellten Ausführungsbeispiel der Figur 2 ist die Basishülse 31 a des Spulenkörpers 29a wiederum entsprechend der Konusform des Hülsenansatzes 5a leicht konisch gestaltet. Es versteht sich aber, dass hier wie auch in Fig. 1 eine kreiszylindrische Basishülse eingesetzt werden kann. Auch kann die Basishülse 31 a mit einem Ringwulst ähnlich dem Ringwulst 39 aus Figur 1 versehen sein, wobei dann der Ring 52 an die Stelle des Ringflansches 37 tritt. Mit anderen Worten, der Ringflansch 37 des Ausführungsbeispiels der Figur 1 kann ggf. auch aus ferromagnetischem Material bestehen.

Die Induktionsspule 13a nach Figur 2 unterscheidet sich ferner in der Konstruktion ihres Flussleitkörpers 41 a vom Ausführungsbeispiel der Figur 1. Auch bei dieser Konstruktion wird die Wicklung 19a radial außen von einer Hülse 43a aus magnetisch leitendem Material, z. B. Ferrit, umschlossen, die auf der von der Einsteckseite des Werkzeugs axial abgewandten Stirnseite der Wicklung 19a in einen Polschuh 47a übergeht. Auf der zur Werkzeugeinsteckseite axial benachbarten Stirnseite endet die Hülse 43a, ohne in einen Polschuh überzugehen. Stattdessen ist auf die Stirnseite 49a des Hülsenabschnitts 5a ein hier angenähert konusschalenförmiger Abschirmkragen 53 aus elektrisch nicht leitendem, magnetisch jedoch leitendem Material, z. B. Ferrit, aufgesetzt, der den magnetischen Fluss von der über die Wicklung 19a axial etwas überstehenden Hülse 43a optimal zur Stirnseite 49a des Hülsenabschnitts 5a lenkt und gleichzeitig den über den Hülsenabschnitt 5a vorstehenden Teil des Werkzeugschafts 11 a abschirmt und vor induktiver Erwärmung schützt. Der Abschirmkragen 53 verläuft allseitig im Abstand von der Hülse 43. Die werkzeugseitige Stirnfläche der Wicklung 19a ist im dargestellten Ausführungsbeispiel mit einer aus nicht magnetischem Material, z. B. temperaturfestem Kunststoff, bestehenden Abstandhalterscheibe 55 abgedeckt. In einer Variante kann diese mit ihrem Innenumfang wiederum im Abstand zum Abschirmkragen 53 endende Scheibe 55 gleichfalls aus dem magnetischen Material des Flussleitkörpers 41a bestehen, also Bestandteil des Flussleitkörpers 41a sein.

Die dem Inneren der Induktionsspule 19a axial zugewandte Fläche des Abschirmkragens 53 verläuft zumindest in einem Teilbereich radial zwischen dem Außenumfang des werkzeugseitigen Endes des Hülsenabschnitts 5a und dem Innenumfang der Induktionsspule 19a axial vom Ende des Hülsenabschnitts 5a weg schräg nach radial außen. Zweckmäßigerweise ist die axiale Höhe h des Abschirmkragens 53, mit der dieser über die Stirnfläche 49a des Hülsenabschnitts 5a axial aufragt, gleich oder größer als der 1,5fache Durchmesser d des Schafts 11 des Werkzeugs. Bevorzugt ist auch der größte Durchmesser des Abschirmkragens 53 kleiner als der größte Wicklungsdurchmesser der Wicklung 19a. Der Abschirmkragen 53 kann insgesamt konisch verlaufen oder aber im Bereich seines Außenumfangs mit einem axial abstehenden Kragen versehen sein.

Der Abschirmkragen 53 ist im übrigen zu einer Baueinheit mit der Induktionsspule 13a verbunden und kann hierzu über eine Ringscheibe 57 mit einem an dem Halter 15a befestigten Gehäuse 59 der Induktionsspule 13a verbunden sein. Für eine auswechselbare Verbindung kann die Ringscheibe 57 und das Gehäuse 59 beispielsweise nach Art eines Bajonettverschlusses aneinander verriegelt sein. Der Abschirmkragen 53 sorgt auf diese Weise nicht nur für die axiale Positionierung der Induktionsspule 13a relativ zum Hülsenabschnitt 5a, sondern kann auch zur Anpassung ein und derselben Induktionsspule 13a an Werkzeughalter 1 mit unterschiedlichem Durchmesser der Aufnahmeöffnung 9a oder des Hülsenansatzes 5a ausgetauscht werden. Es versteht sich, dass die vorstehend erläuterte Abschirmkragenvariante auch bei einer Konstruktion der Induktionsspule gemäß Figur 1 anstelle des dort erläuterten Polschuhs 45 eingesetzt werden kann, und desgleichen kann der anhand der Figur 1 erläuterte Polschuh 45 bei einer Induktionsspule gemäß Figur 2 benutzt werden.

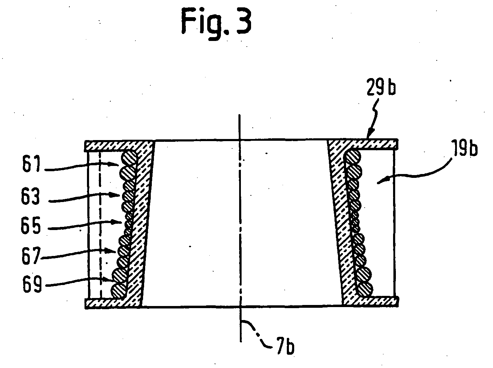

Fig. 3 zeigt schematisch eine weitere Variante einer Wicklung 19b, die wiederum auf einen Spulenkörper 29b der vorstehend, insbesondere anhand der Fig. 2 erläuterten Art aufgebracht ist. Die Wicklung 19b hat mehrere, hier fünf voneinander unabhängig gewickelte und auf einen axialen Teilbereich der axialen Gesamtlänge des Spulenkörpers 29b beschränkte Wicklungshauptbereiche 61-69, deren Drahtdurchmesser von den axialen Enden der Wicklung 19b ausgehend zu einem Mittelbereich hin in Stufen abnimmt. Die Wicklungshauptbereiche 61, 69 haben dementsprechend den größten Drahtdurchmesser, während der mittige Wicklungshauptbereich 65 den kleinsten Drahtdurchmesser hat. Die Wicklungshauptbereiche 61-69 sind sämtlich zueinander parallel geschaltet und zwar wiederum so, dass sämtliche Wicklungshauptbereiche gleichsinnige Induktionsströme in dem nicht näher dargestellten Hülsenansatz des Werkzeughalters induzieren. Auf Grund des gestuften Drahtdurchmessers fließen in den Wicklungshauptbereichen unterschiedlich große Ströme, die zu einer Abstufung der Induktionsströme und damit zur Vergleichmäßigung der Erwärmungstemperatur des Hülsenansatzes führen. Es versteht sich, dass die in Fig. 3 lediglich schematisch angedeutete Wicklung den gesamten Wicklungsraum des Spulenkörpers 29b ausfüllt. Die Wicklung 19b lässt sich zusammen mit Flussleitkörperkonstruktionen sowohl der Fig. 1 als auch der Fig. 2 einsetzen. Die anhand der Fig. 1 und 2 erläuterten Maßnahmen zur Beeinflussung der Axialverteilung der Induktionsströme können auch für die einzelnen Wicklungshauptbereiche 61-69 eingesetzt werden.

## Patentansprüche

1. Vorrichtung zum induktiven Erwärmen eines eine zentrische Aufnahmeöffnung (9) für einen Schaft (11) eines Rotationswerkzeugs enthaltenden Hülsenabschnitts (5) eines Werkzeughalters (1), der den in der Aufnahmeöffnung (9) sitzenden Schaft (11) des Werkzeugs im Presssitz hält und bei Erwärmung freigibt, umfassend
- eine den Hülsenabschnitt (5) des Werkzeughalters (1) umschließende Induktionsspule (13) und
- einen die Induktionsspule (13) mit elektrischem Strom periodisch wechselnder Amplitude speisenden Generator (17),
**dadurch gekennzeichnet, dass**
- die Wicklung (19) in Richtung der Spulenachse (7) einen zwischen zwei Wicklungshauptbereichen (21, 23; 61-69) gelegenen Zwischenbereich umfasst und
- gesehen in einer Axiallängsschnittebene der Induktionsspule (13) - die Anzahl der Spulenwindungen ihrer Wicklung (19) pro Längeneinheit in Richtung der Spulenachse (7) oder/und die Anzahl der Spulenwindungen pro Flächeneinheit der Axiallängsschnittebene in dem Zwischenbereich kleiner ist als in den beiden Wicklungshauptbereichen (21, 23; 61-69) oder/und der Wicklungsinnendurchmesser in den beiden Wicklungshauptbereichen (21, 23; 61-69) kleiner ist als in den Zwischenbereichen oder/und der Wicklungsinnendurchmesser zumindest in einem axialen Teilbereich der Induktionsspule (13) von den beiden Wicklungshauptbereichen (21, 23; 61-69) zum Zwischenbereich hin zunimmt.

2. Vorrichtung nach Anspruch 1, **dadurch gekennzeichnet, dass** die Wicklung (19) zumindest über einen axialen Teilabschnitt des Zwischenbereichs keine Windungen hat.

3. Vorrichtung nach Anspruch 2, **dadurch gekennzeichnet, dass** der von Windungen freie Teilabschnitt des Zwischenbereichs magnetisch leitendes Material (53) enthält.

4. Vorrichtung nach Anspruch 2, **dadurch gekennzeichnet, dass** die Wicklung auf eine Spulenkörperhülse (31) mit einem die Wicklungshauptbereiche (21, 23) in dem windungsfreien Teilabschnitt des Zwischenbereichs trennenden Ringflansch (37) gewickelt ist.

5. Vorrichtung nach einem der Ansprüche 1 bis 4, **dadurch gekennzeichnet, dass** die Wicklung auf eine Spulenkörperhülse (31) gewickelt ist, deren den Wicklungsinnendurchmesser bestimmender Außenmantel zumindest in dem Zwischenbereich einen radial nach außen vorstehenden Ringwulst (39) bildet.

6. Vorrichtung nach einem der Ansprüche 1 bis 5, **dadurch gekennzeichnet, dass** die Wicklung (19) zumindest zwei axial nebeneinander angeordnete Wicklungshauptbereiche (21, 23; 61-69) mit jeweils einer Vielzahl von Windungen umfasst und dass die Wicklungshauptbereiche (21, 23; 61-69) zueinander parallel geschaltet sind, und zwar so, dass die Windungen der Wicklungshauptbereiche gleichsinnig von Strom durchflossen sind.

7. Vorrichtung nach Anspruch 6, **dadurch gekennzeichnet, dass** die Wicklungshauptbereiche (21, 23; 61-69) von unterschiedlich großen Strömen durchflossen sind.

8. Vorrichtung nach Anspruch 6 oder 7, **dadurch gekennzeichnet, dass** die Wicklung (19b) mehrere parallel geschaltete Wicklungshauptbereiche (61-69) umfasst, deren Windungen unterschiedlichen Drahtdurchmesser haben, wobei zumindest der zur Werkzeugeinsteckseite nächstgelegene Wicklungshauptbereich (61) einen größeren Drahtdurchmesser hat als der in axialer Richtung benachbarte Wicklungshauptbereich (63 bzw. 65).

9. Vorrichtung nach Anspruch 8, **dadurch gekennzeichnet, dass** wenigstens drei parallel geschaltete Wicklungshauptbereiche (61-69) vorgesehen sind, von welchen der in einem mittleren Bereich vorgesehene Wicklungshauptbereich (63-67) einen kleineren Drahtdurchmesser hat als die axial beiderseits vorgesehenen Wicklungshauptbereiche.

10. Vorrichtung zum induktiven Erwärmen eines eine zentrische Aufnahmeöffnung (9) für einen Schaft (11) eines Rotationswerkzeugs enthaltenden Hülsenabschnitts (5) eines Werkzeughalters (1), der den in der Aufnahmeöffnung (9) sitzenden Schaft (11) des Werkzeugs im Presssitz hält und bei Erwärmung freigibt, umfassend
- eine den Hülsenabschnitt (5) des Werkzeughalters (1) umschließende Induktionsspule (13) und
- einen die Induktionsspule (13) mit elektrischem Strom periodisch wechselnder Amplitude speisenden Generator (17),
**dadurch gekennzeichnet, dass**
die Wicklung (19; 19b) zumindest zwei axial nebeneinander angeordnete Wicklungshauptbereiche (21, 23; 61-69) mit jeweils einer Vielzahl von Windungen umfasst, dass die Wicklungshauptbereiche (21, 23; 61-69) zueinander parallel geschaltet sind, und zwar so, dass die Windungen der Wicklungshauptbereiche gleichsinnig von Strom durchflossen sind und
dass die Wicklungshauptbereiche (21, 23; 61-69) von unterschiedlich großen Strömen durchflossen sind.

11. Vorrichtung nach Anspruch 10, **dadurch gekennzeichnet, dass** die Wicklung (1 9b) mehrere parallel geschaltete Wicklungshauptbereiche (61-69) umfasst, deren Windungen unterschiedlichen Drahtdurchmesser haben, wobei zumindest der zur Werkzeugeinsteckseite nächstgelegene Wicklungshauptbereich (61) einen größeren Drahtdurchmesser hat als der in axialer Richtung benachbarte Wicklungshauptbereich (63 bzw. 65).

12. Vorrichtung nach Anspruch 11, **dadurch gekennzeichnet, dass** wenigstens drei parallel geschaltete Wicklungshauptbereiche (61-69) vorgesehen sind, von welchen der in einem mittleren Bereich vorgesehene Wicklungshauptbereich (63-67) einen kleineren Drahtdurchmesser hat als die axial beiderseits vorgesehenen Wicklungshauptbereiche.

13. Vorrichtung nach einem der Ansprüche 1 bis 12, **dadurch gekennzeichnet, dass** im Bereich einer oder beider axialer Stirnenden der Wicklung (19) oder/und an ihrem Umfang ein Flussleitelement (41) aus elektrisch nicht leitendem, magnetisch jedoch leitendem Material angeordnet ist.

## Claims

1. Arrangement for inductively heating a sleeve section (5) which contains a central accommodating opening (9) for a shank (11) of a rotary tool and belongs to a tool-holder (1), which retains the tool shank (11), seated in the accommodating opening (9), with a press-fit and releases it when heated, comprising
- an induction coil (13), which encloses the sleeve section (5) of the tool-holder (1), and
- a generator (17), which supplies the induction coil (13) with electric current of periodically changing amplitude,
**characterized in that**
- the winding (19) comprises, in the direction of the coil axis (7), an intermediate region located between two main winding regions (21, 23; 61-69), and
- as seen in an axial-longitudinal-section plane of the induction coil (13) - the number of coil turns of the winding (19) of said induction coil per unit of length in the direction of the coil axis (7) and/or the number of coil turns per unit of surface area of the axial-longitudinal-section plane is smaller in the intermediate region than in the two main winding regions (21, 23; 61-69) and/or the internal winding diameter is smaller in the two main winding regions (21, 23; 61-69) than in the intermediate regions and/or the internal winding diameter, at least in an axial sub-region of the induction coil (13), increases from the two main winding regions (21, 23; 61-69) in the direction of the intermediate region.

2. Arrangement according to Claim 1, **characterized in that** the winding (19) has no turns at least over an axial sub-section of the intermediate region.

3. Arrangement according to Claim 2, **characterized in that that** sub-section of the intermediate region which is free of turns contains magnetically conductive material (33).

4. Arrangement according to Claim 2, **characterized in that** the winding is wound onto a coil-body sleeve (31) with an annular flange (37) separating the main winding regions (21, 23) in the turn-free sub-section of the intermediate region.

5. Arrangement according to one of Claims 1 to 4, **characterized in that** the winding is wound onto a coil-body sleeve (31) of which the outer casing, which determines the internal winding diameter, forms a radially outwardly projecting annular bead (39) at least in the intermediate region.

6. Arrangement according to one of Claims 1 to 5, **characterized in that** the winding (19) comprises at least two main winding regions (21, 23; 61-69) which are arranged axially one beside the other and each have a multiplicity of turns, and **in that** the main winding regions (21, 23; 61-69) are connected in parallel with one another, to be precise such that the turns of the main winding regions have current flowing through them in the same direction.

7. Arrangement according to Claim 6, **characterized in that** the main winding regions (21, 23; 61-69) have currents of different magnitudes flowing through them.

8. Arrangement according to Claim 6 or 7, **characterized in that** the winding (19b) comprises a plurality of main winding regions (61-69) which are connected in parallel and of which the windings have different wire diameters, at least the main winding region (61) which is located nearest the tool-insertion side having a larger wire diameter than the axially adjacent main winding region (63 or 65).

9. Arrangement according to Claim 8, **characterized in that** at least three parallel-connected main winding regions (61-69) are provided, of which the main winding region (63-67) provided in a central region has a smaller wire diameter than the main winding regions provided axially on both sides.

10. Arrangement for inductively heating a sleeve section (5) which contains a central accommodating opening (9) for a shank (11) of a rotary tool and belongs to a tool-holder (1), which retains the tool shank (11), seated in the accommodating opening (9), with a press-fit and releases it when heated, comprising
- an induction coil (13), which encloses the sleeve section (5) of the tool-holder (1), and
- a generator (17), which supplies the induction coil (13) with electric current of periodically changing amplitude,
**characterized in that**
the winding (19; 19b) comprises at least two main winding regions (21, 23; 61-69) which are arranged axially one beside the other and each have a multiplicity of turns, **in that** the main winding regions (21, 23; 61-69) are connected in parallel with one another, to be precise such that the turns of the main winding regions have current flowing through them in the same direction, and **in that** the main winding regions (21, 23; 61-69) have currents of different magnitudes flowing through them.

11. Arrangement according to Claim 10, **characterized in that** the winding (19b) comprises a plurality of main winding regions (61-69) which are connected in parallel and of which the windings have different wire diameters, at least the main winding region (61) which is located nearest the tool-insertion side having a larger wire diameter than the axially adjacent main winding region (63 or 65).

12. Arrangement according to Claim 11, **characterized in that** at least three parallel-connected main winding regions (61-69) are provided, of which the main winding region (63-67) provided in a central region has a smaller wire diameter than the main winding regions provided axially on both sides.

13. Arrangement according to one of Claims 1 to 12, **characterized in that** a flux-conducting element (41) made of electrically non-conductive, but magnetically conductive material is arranged in the region of one or both axial ends of the winding (19) and/or on the circumference thereof.

## Revendications

1. Dispositif pour le chauffage inductif d'un segment de douille (5) d'un porte-outil (1) comprenant une ouverture de réception centrale (9) pour une tige (11) d'un outil rotatif qui maintient par ajustage serré la tige (11) de l'outil placée dans l'ouverture de réception (9) et qui la libère lors du chauffage, comprenant
- une bobine d'induction (13) entourant le segment de douille (5) du porte-outil (1) et
- un générateur (17) alimentant la bobine d'induction (13) en courant électrique d'une amplitude variant périodiquement,
**caractérisé en ce que**
- l'enroulement (19) dans la direction de l'axe de bobine (7) comprend une zone intermédiaire placée entre deux zones d'enroulement principales (21, 23 ; 61-69) et
- vu dans un plan de coupe axiale longitudinale de la bobine d'induction (13), le nombre de spires de bobine de son enroulement (19) par unité de longueur dans la direction de l'axe de bobine (7) et/ou le nombre de spires de bobine par unité de superficie du plan de coupe axiale longitudinale est plus faible dans la zone intermédiaire que dans les deux zones d'enroulement principales (21, 23 ; 61-69)
et/ou le diamètre intérieur de l'enroulement dans les deux zones d'enroulement principales (21, 23 ; 61-69) est plus petit que dans les zones intermédiaires et/ou le diamètre intérieur de l'enroulement augmente au moins dans une zone axiale partielle de la bobine d'induction (13) depuis les deux zones d'enroulement principales (21, 23 ; 61-69) jusqu'à la zone intermédiaire.

2. Dispositif selon la revendication 1, **caractérisé en ce que** l'enroulement (19) ne comporte aucune spire au moins dans un segment partiel axial de la zone intermédiaire.

3. Dispositif selon la revendication 2, **caractérisé en ce que** le segment partiel sans spires de la zone intermédiaire contient une matière magnétiquement conductrice (53).

4. Dispositif selon la revendication 2, **caractérisé en ce que** l'enroulement est enroulé sur une douille de bobine (31) avec une bride annulaire (37) séparant les zones d'enroulement principales (21, 23) dans le segment partiel sans spires de la zone intermédiaire.

5. Dispositif selon l'une quelconque des revendications 1 à 4, **caractérisé en ce que** l'enroulement est enroulé sur une douille de bobine (31) dont l'enveloppe extérieure déterminant le diamètre intérieur d'enroulement forme un bourrelet annulaire (39) débordant radialement vers l'extérieur au moins dans la zone intermédiaire.

6. Dispositif selon l'une quelconque des revendications 1 à 5, **caractérisé en ce que** l'enroulement (19) comprend au moins deux zones d'enroulement principales (21, 23 ; 61-69) disposées axialement l'une à côté de l'autre ayant chacune une pluralité de spires et **en ce que** les zones d'enroulement principales (21, 23 ; 61-69) sont montées parallèlement les unes aux autres, et ce, de manière à ce que les spires des zones d'enroulement principales soient parcourues par le courant dans le même sens.

7. Dispositif selon la revendication 6, **caractérisé en ce que** les zones d'enroulement principales (21, 23 ; 61-69) sont parcourues par des courants plus ou moins forts.

8. Dispositif selon la revendication 6 ou 7, **caractérisé en ce que** l'enroulement (19b) comprend plusieurs zones d'enroulement principales (61-69) montées parallèlement dont les spires ont des diamètres de fils différents, au moins la zone d'enroulement principale (61) la plus proche du côté d'emmanchement de l'outil ayant un diamètre de fil plus grand que la zone d'enroulement principale (63 ou 65) adjacente dans la direction axiale.

9. Dispositif selon la revendication 8, **caractérisé en ce qu'**il est prévu au moins trois zones d'enroulement principales (61-69) montées parallèlement, parmi lesquelles la zone d'enroulement principale (63-67) prévue dans une zone médiane a un diamètre de fil plus petit que les zones d'enroulement principales prévues axialement des deux côtés.

10. Dispositif pour le chauffage inductif d'un segment de douille (5) d'un porte-outil (1) comprenant une ouverture de réception centrale (9) pour une tige (11) d'un outil rotatif qui maintient par ajustage serré la tige (11) de l'outil placée dans l'ouverture de réception (9) et qui la libère lors du chauffage, comprenant
- une bobine d'induction (13) entourant le segment de douille (5) du porte-outil (1) et
- un générateur (17) alimentant la bobine d'induction (13) en courant électrique d'une amplitude variant périodiquement,
**caractérisé en ce que**
l'enroulement (19 ; 19b) comprend au moins deux zones d'enroulement principales (21, 23 ; 61-69) disposées axialement l'une à côté de l'autre ayant chacune une pluralité de spires, **en ce que** les zones d'enroulement principales (21, 23 ; 61-69) sont montées parallèlement les unes aux autres, et ce, de manière à ce que les spires des zones d'enroulement principales soient parcourues par le courant dans le même sens et
**en ce que** les zones d'enroulement principales (21, 23 ; 61-69) sont parcourues par des courants plus ou moins forts.

11. Dispositif selon la revendication 10, **caractérisé en ce que** l'enroulement (19b) comprend plusieurs zones d'enroulement principales (61-69) montées parallèlement dont les spires ont des diamètres de fils différents, au moins la zone d'enroulement principale (61) la plus proche du côté d'emmanchement de l'outil ayant un diamètre de fil plus grand que la zone d'enroulement principale (63 ou 65) adjacente dans la direction axiale.

12. Dispositif selon la revendication 11, **caractérisé en ce qu'**il est prévu au moins trois zones d'enroulement principales (61-69) montées parallèlement, parmi lesquelles la zone d'enroulement principale (63-67) prévue dans une zone médiane a un diamètre de fil plus petit que les zones d'enroulement principales prévues axialement des deux côtés.

13. Dispositif selon l'une quelconque des revendications 1 à 12, **caractérisé en ce qu'**un élément conducteur (41) fait en une matière non conductrice électriquement, mais magnétiquement conductrice, est placé dans la zone d'une extrémité frontale axiale ou des deux extrémités frontales axiales de l'enroulement (19) et/ou sur son pourtour.
